Europäisches Patentamt

European Patent Office

Office européen des brevets

(11) Veröffentlichungsnummer: **0 392 164 B1**

(19)

# (12) EUROPÄISCHE PATENTSCHRIFT

(45) Veröffentlichungstag der Patentschrift: **22.11.95**

(51) Int. Cl.⁶: **B60T 8/00**, B60K 28/16

(21) Anmeldenummer: **90103182.3**

(22) Anmeldetag: **20.02.90**

(54) **Verfahren zur Ermittlung des Reibwertes zwischen der Fahrbahn und den Reifen eines Fahrzeuges.**

(30) Priorität: **12.04.89 DE 3912014**

(43) Veröffentlichungstag der Anmeldung:
**17.10.90 Patentblatt 90/42**

(45) Bekanntmachung des Hinweises auf die
Patenterteilung:
**22.11.95 Patentblatt 95/47**

(84) Benannte Vertragsstaaten:
**DE FR GB IT SE**

(56) Entgegenhaltungen:
**EP-A- 0 201 843**
**WO-A-89/02842**

(73) Patentinhaber: **Bayerische Motoren Werke Aktiengesellschaft**
**Patentabteilung AJ-3**
**D-80788 München (DE)**

(72) Erfinder: **Herb, Eugen**
**Luisenstrasse 68**
**D-8000 München 40 (DE)**
Erfinder: **Häcker, Dirk**
**Johans-Langmantelstrasse 20**
**D-8027 Neuried (DE)**
Erfinder: **Schwartz, Ekkehard**
**Schertlinstrasse 11 1/140**
**D-8900 Augsburg (DE)**

EP 0 392 164 B1

**Beschreibung**

Die Erfindung betrifft ein Verfahren zur Ermittlung des Reibwertes zwischen der Fahrbahn und den Reifen eines Fahrzeuges bei Annäherung an einen querdynamisch kritischen Fahrzustand.

Es sind bereits eine Reihe von verschiedenen Verfahren zur Ermittlung des Reibwertes zwischen der Fahrbahn und den Reifen des Fahrzeuges bekannt.

So ist aus der DE-PS 19 59 734 bekannt, zur Reibwertermittlung die in den Spurstangen der Vorderräder eines Fahrzeuges auftretenden Stabkräfte bei einer bestimmten Vorspur zu messen.

Ferner ist aus der DE-OS 26 24 041 bekannt, den Reibwert zwischen einem Fahrzeugreifen und der Fahrbahn aufgrund des Antriebsdrehmomentes und damit der Antriebskraft eines Kraftfahrzeuges und des bei einer bestimmten Antriebskraft auftretenden Schlupfes zu ermitteln.

Darüber hinaus ist aus der DE-OS 31 19 153 bekannt, zur Ermittlung des Haftreibwertes zwischen den Fahrzeugreifen und der Fahrbahn den Bremsdruck zum Zeitpunkt des Eintretens von Schlupf zwischen den Fahrzeugreifen und der Fahrbahn zu messen.

Schließlich ist aus der DE-OS 35 35 843 ein Verfahren zur Bestimmung des Reibwertes zwischen den Fahrzeugreifen und der Fahrbahn bekannt, bei dem zur Ermittlung des Reibwertes während eines Bremsvorganges fortlaufend der Bremsdruck und die Radgeschwindigkeit ermittelt werden.

All die bekannten Verfahren haben den Nachteil, daß der Reibwert bei Kurvenfahrt des Fahrzeuges nicht bzw. nur unzureichend genau bestimmt werden kann.

Es ist daher Aufgabe der Erfindung, ein Verfahren zur Ermittlung des Reibwertes zwischen der Fahrbahn und den Reifen eines Fahrzeuges bei Annäherung an einen querdynamisch kritischen Fahrzustand, d. h. bei forcierter Kurvenfahrt zu ermitteln.

Diese Aufgabe wird gemäß einer ersten Alternative der Erfindung dadurch gelöst, daß die jeweiligen Werte für den Lenkwinkel, die Fahrgeschwindigkeit, die Gierwinkelgeschwindigkeit sowie die Querbeschleunigung des Fahrzeuges gemessen bzw. ermittelt werden, daß in Abhängigkeit vom Lenkwinkel und von der Fahrgeschwindigkeit anhand eines mathematischen Referenzmodells eine Referenz- oder Soll-Gierwinkelgeschwindigkeit bestimmt wird, daß die Differenz zwischen der tatsächlichen Gierwinkelgeschwindigkeit des Fahrzeuges und der Referenz- oder Soll-Gierwinkelgeschwindigkeit ermittelt wird und daß derjenige Wert der Querbeschleunigung als Maß für den Reibwert zwischen der Fahrbahn und den Fahrzeugreifen bestimmt wird, bei dem die Gierwinkelgeschwindigkeitsdifferenz stark anzusteigen beginnt.

Da das mathematische Fahrzeugreferenzmodell im in Abhängigkeit vom Reibwert zwischen den Fahrzeugreifen und der Fahrbahn relativ niedrigen Querbeschleunigungsbereich sehr gut mit dem tatsächlichen Fahrzeugverhalten übereinstimmt, tritt im relativ niedrigen Querbeschleunigungsbereich nahezu keine Gierwinkelgeschwindigkeitsdifferenz zwischen der tatsächlichen Gierwinkelgeschwindigkeit des Fahrzeuges und der Referenz- oder Soll-Gierwinkelgeschwindigkeit auf. Im relativ oberen Querbeschleunigungsbereich tritt zwischen dem mathematischen Fahrzeugreferenzmodell und dem tatsächlichen Fahrzeugverhalten eine zunehmend größere Abweichung auf. Dies hat zur Folge, daß die Gierwinkelgeschwindigkeitsdifferenz zwischen der tatsächlichen Gierwinkelgeschwindigkeit des Fahrzeuges und der Referenz- oder Soll-Gierwinkelgeschwindigkeit bei Annäherung an einen querdynamisch kritischen Fahrzustand, d. h. bei Erreichen der zulässigen Querbeschleunigung progressiv zunimmt. Im Umkehrschluß bedeutet dies, daß die gerade noch zulässige Querbeschleunigung des Fahrzeuges erreicht ist, wenn die Gierwinkelgeschwindigkeitsdifferenz stark anzusteigen beginnt. Da der Quotient aus der für einen bestimmten Reibwert zulässigen Querbeschleunigung und der für diesen Reibwert maximal möglichen Querbeschleunigung reibwertunabhängig konstant ist, kann aus der zulässigen Querbeschleunigung auf die für diesen Reibwert maximal mögliche Querbeschleunigung geschlossen werden. Da die maximal mögliche Querbeschleunigung wiederum direkt proportional zum jeweiligen Reibwert zwischen den Fahrzeugreifen und der Fahrbahn ist, stellt die ermittelte zulässige Querbeschleunigung ein Maß für den gerade gegebenen Reibwert zwischen der Fahrbahn und den Fahrzeugreifen dar.

Anstelle der Differenz zwischen dem Istwert und dem anhand eines Fahrzeugreferenzmodells bestimmten Sollwert der Gierwinkelgeschwindigkeit kann mit dem gleichen Ergebnis auch die jeweilige Differenz zwischen dem Istwert und dem ebenfalls anhand eines Fahrzeugreferenzmodells bestimmten Sollwert der Querbeschleunigung, der Schwimmwinkel-Geschwindigkeit oder der Vorderraddifferenzdrehzahl des Fahrzeuges ausgewertet werden.

Zur Erkennung eines starken Anstiegs der Gierwinkelgeschwindigkeitsidfferenz wird diese vorzugsweise mit einem vorgebbaren Schwellwert verglichen.

Zur Erkennung eines starken Anstiegs der Gierwinkelgeschwindigkeitsdifferenz wird gemäß einer anderen Weiterbildung der ersten Alternative der Erfindung der Differentialquotient aus der Gierwinkelgeschwindigkeitsdifferenz und der Querbeschleunigung fortlaufend berechnet und sodann mit einem Grenz-

2

wert verglichen. Wenn in diesem Falle die Steigung der Gierwinkelgeschwindigkeitsdifferenzkurve einen vorgegebenen Grenzwert überschreitet, dann bedeutet dies, daß die für den jeweiligen Reibwert gegebene zulässige Querbeschleunigung erreicht ist. Da diese zulässige Querbeschleunigung, wie vorstehend dargelegt, ein Maß für den jeweiligen Reibwert zwischen der Fahrbahn und den Fahrzeugreifen ist, braucht zur Ermittlung des jeweiligen Reibwertes lediglich derjenige Wert der Querbeschleunigung bestimmt werden, bei der die Steigung der Gierwinkelgeschwindigkeitsdifferenzkurve einen vorgegebenen Grenzwert überschreitet.

Die der Erfindung zugrundeliegende Aufgabe wird gemäß einer zweiten Alternative der Erfindung dadurch gelöst, daß die jeweiligen Werte für den Lenkwinkel, die Fahrgeschwindigkeit, die Gierwinkelgeschwindigkeit sowie die Querbeschleunigung des Fahrzeuges gemessen bzw. ermittelt werden, daß in Abhängigkeit von der Gierwinkelgeschwindigkeit und der Fahrgeschwindigkeit anhand eines mathematischen Fahrzeugreferenzmodells ein Referenz-oder Soll-Lenkwinkel bestimmt wird, daß die Differenz zwischen dem tatsächlichen Lenkwinkel des Fahrzeuges und dem Referenz- oder Soll-Lenkwinkel ermittel wird und daß derjenige Wert der Querbeschleunigung als Maß für den Reibwert zwischen der Fahrbahn und den Fahrzeugreifen bestimmt wird, bei dem die Lenkwinkeldifferenz stark anzusteigen beginnt.

Da das mathematische Fahrzeugreferenzmodell im in Abhängigkeit vom Reibwert zwischen den Fahrzeugreifen und der Fahrbahn relativ niedrigen Querbeschleunigungsbereich sehr gut mit dem tatsächlichen Fahrzeugverhalten übereinstimmt, tritt im relativ niedrigen Querbeschleunigungsbereich nahezu keine Lenkwinkeldifferenz zwischen dem tatsächlich gemessenen Lenkwinkel des Fahrzeuges und dem Referenz- oder Soll-Lenkwinkel auf. Im relativ oberen Querbeschleunigungsbereich tritt dagegen zwischen dem mathematischen Fahrzeugreferenzmodell und dem tatsächlichen Fahrzeugverhalten bei Annäherung an einen querdynamisch kritischen Fahrzustand, d. h. bei Erreichen der zulässigen Querbeschleunigung des Fahrzeuges, eine progressiv zunehmende Abweichung auf. Dies hat zur Folge, daß bei Erreichen der zulässigen Querbeschleunigung des Fahrzeuges die Lenkwinkeldifferenz zwischen dem gemessenen tatsächlichen Lenkwinkel des Fahrzeuges und dem Referenz- oder Soll-Lenkwinkel progressiv zunimmt. Im Umkehrschluß bedeutet dies wiederum, daß die für den jeweiligen Reibwert zulässige Querbeschleunigung erreicht ist, wenn die Lenkwinkeldifferenz stark anzusteigen beginnt. Da die zulässige Querbeschleunigung, wie vorstehend dargelegt, ein Maß für den gerade vorliegenden Reibwert ist, kann durch Feststellen der Querbeschleunigung, bei der die Lenkwinkeldifferenz stark anzusteigen beginnt, der jeweils vorliegende Reibwert zwischen den Fahrzeugreifen und der Fahrbahn bestimmt werden.

Zur Erkennung eines starken Anstieges der Lenkwinkeldifferenz kann diese gemäß einer ersten Weiterbildung der zweiten Alternative der Erfindung mit einem Schwellwert verglichen werden.

Eine andere vorteilhafte Möglichkeit zur Erkennung eines starken Anstiegs der Lenkwinkeldifferenz besteht darin, daß der Differentialquotient aus der Lenkwinkeldifferenz und der Querbeschleunigung fortlaufend berechnet und dieser Differentialquotient zur Erkennung eines starken Anstiegs der Lenkwinkeldifferenz mit einem Grenzwert verglichen wird. Im folgenden wird die Erfindung anhand zweier Ausführungsbeispiele näher erläutert.

Es zeigen:

Fig. 1    ein Blockschaltbild einer nach der ersten Alternative des erfindungsgemäßen Verfahrens arbeitenden Reibwert-Ermittlungseinrichtung,

Fig. 2    ein Gierwinkelgeschwindigkeitsidfferenz-Querbeschleunigungs-Diagramm zur Erläuterung der Reibwert-Ermittlungseinrichtung von Fig. 1,

Fig. 3    ein Blockschaltbild einer nach der zweiten Alternative des erfindungsgemäßen Verfahrens arbeitenden Reibwert-Ermittlungseinrichtung und

Fig. 4    ein Lenkwinkel-Querbeschleunigungs-Diagramm zur Erläuterung der Funktionsweise der Reibwert-Ermittlungseinrichtung von Fig. 3.

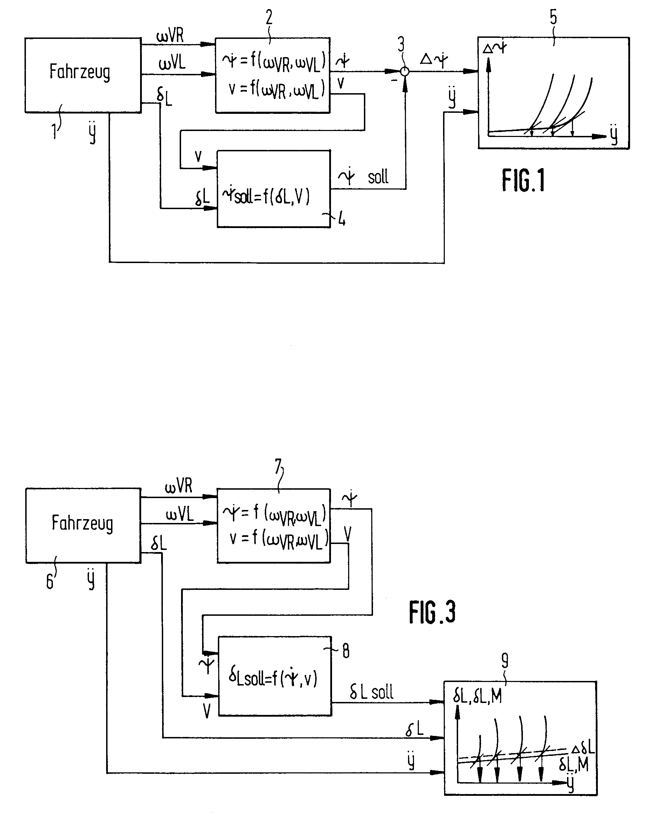

Bei dem in Fig. 1 dargestellten Blockschaltbild stellt der Block 1 das Fahrzeug dar. Am Fahrzeug 1 werden die Winkelgeschwindigkeiten $\omega_{VR}$ und $\omega_{VL}$ der nichtangetriebenen Räder des Fahrzeuges auf an sich bekannte Weise gemessen und einer ersten Berechnungseinheit 2 zugeführt. In dieser ersten Berechnungseinheit 2 wird aus den Winkelgeschwindigkeiten $\omega_{VR}$ und $\omega_{VL}$ der beiden nichtangetriebenen Fahrzeugräder und dem dynamischen Radhalbmesser $r_{dyn.}$ die Fahrgeschwindigkeit V des Fahrzeuges gemäß der Formel

$$V = \frac{(\omega_{VR} + \omega_{VL}) \cdot r_{dyn.}}{2}$$

3

berechnet. Ferner wird in dieser ersten Berechnungseinheit 2 aus den Winkelgeschwindigkeiten $\omega_{VR}$ und $\omega_{VL}$, dem dynamischen Radhalbmesser $r_{dyn.}$ und der Spurweite $s_V$ der Achse der nichtangetriebenen Räder die Gierwinkelgeschwindigkeit $\dot\psi$ gemäß der Formel

$$\dot\psi = \frac{(\omega_{VR} - \omega_{VL}) \cdot r_{dyn.}}{s_V}$$

berechnet.

Während die berechnete Gierwinkelgeschwindigkeit $\dot\psi$ dem positiven Eingang einer Summationsstelle 3 zugeführt wird, wird die in der ersten Berechnungseinheit 2 berechnete Fahrgeschwindigkeit V des Fahrzeuges einer zweiten Berechnungseinheit 4 zugeführt. Der zweiten Berechnungseinheit 4 wird darüber hinaus noch der am Fahrzeug 1 gemessene Lenkwinkel $\delta_L$ zugeführt. In dieser zweiten Berechnungseinheit 4 wird dann in Abhängigkeit von der in der ersten Berechnungseinheit 2 berechneten Fahrgeschwindigkeit V des Fahrzeuges und dem am Fahrzeug 1 gemessenen Lenkwinkel $\delta_L$ anhand eines mathematischen Fahrzeugreferenzmodells eine Referenz- oder Soll-Gierwinkelgeschwindigkeit $\dot\psi_{soll}$ bestimmt. Diese Referenz-oder Soll-Gierwinkelgeschwindigkeit $\dot\psi_{soll}$ wird dem invertierenden Eingang der Summationsstelle 3 zugeführt. Am Ausgang dieser Summationsstelle 3 erscheint dann die Gierwinkelgeschwindigkeitsdifferenz $\Delta\dot\psi$ zwischen der tatsächlichen Gierwinkelgeschwindigkeit $\dot\psi$ des Fahrzeuges und der Referenz- oder Soll-Gierwinkelgeschwindigkeit $\dot\psi_{soll}$. Diese Gierwinkelgeschwindigkeitsdifferenz $\Delta\dot\psi$ wird dann ebenso wie die am Fahrzeug gemessene Querbeschleunigung $\ddot{y}$ einer dritten Berechnungseinheit 5 zugeführt. In dieser dritten Berechnungseinheit 5 wird derjenige Wert der Querbeschleunigung $\ddot{y}$ als Maß für den Reibwert $\mu$ zwischen der Fahrbahn und dem Fahrzeugreifen bestimmt, bei dem die Gierwinkelgeschwindigkeitsdifferenz stark anzusteigen beginnt.

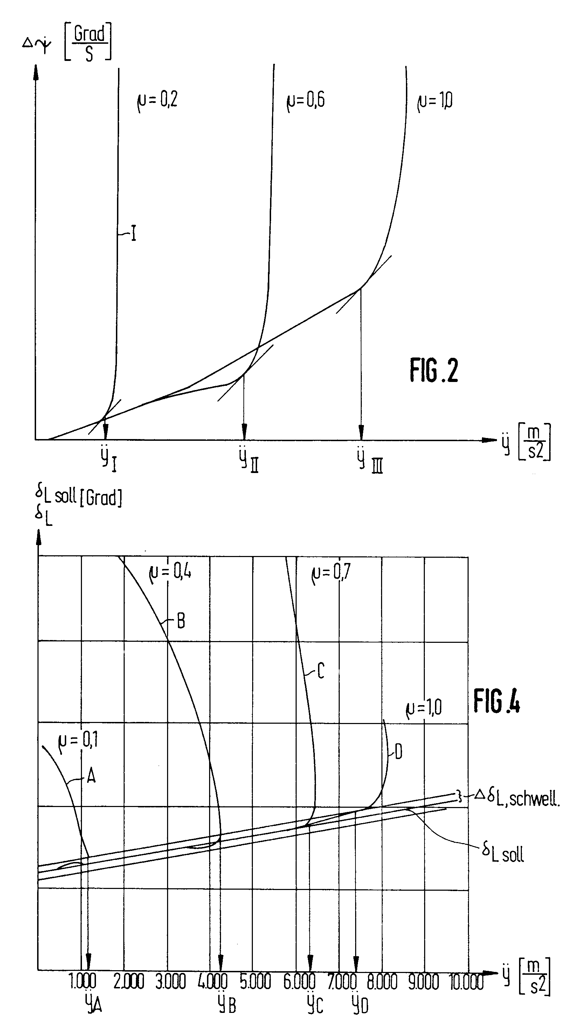

In Fig. 2 ist die Gierwinkelgeschwindigkeitsdifferenz $\Delta\dot\psi$ jeweils für den Reibwert $\mu$ = 0,2, $\mu$ = 0,6 und $\mu$ = 1,0 in Abhängigkeit von der Querbeschleunigung $\ddot{y}$ des Fahrzeuges dargestellt. Wie der Fig. 2 zu entnehmen ist, nimmt die Steigung der Gierwinkelgeschwindigkeitsdifferenz-Querbeschleunigungs-Kurven jeweils bei Annäherung an einen querdynamisch kritischen Fahrzustand, d. h. bei Erreichen der jeweiligen zulässigen Querbeschleunigung stark zu. Diese starke Steigungszunahme der jeweiligen Gierwinkelgeschwindigkeitsdif£erenz-Querbeschleunigungskurve wird durch die dritte Berechnungseinheit 5 (Fig. 1) festgestellt. Ferner wird durch diese dritte Berechnungseinheit 5 derjenige Wert der Querbeschleunigung als Maß für den Reibwert $\mu$ zwischen der Fahrbahn und den Fahrzeugreifen bestimmt, bei dem die Steigerung der Gierwinkelgeschwindigkeitsdifferenz $\Delta\dot\psi$ einen Grenzwert übersteigt. In der Fig. 2 übersteigt die Steigung der Gierwinkelgeschwindigkeitsdifferenz-Querbeschleunigungskurve I den Grenzwert 1 beispielsweise beim Wert $\ddot{y}_I$ der Querbeschleunigung $\ddot{y}$. Dieser Wert $\ddot{y}_I$ stellt ein Maß für den gerade vorliegenden Reibwert, nämlich für den Reibwert $\mu$ = 0,2 dar. Analog dazu stellt der Wert $\ddot{y}_{II}$ ein Maß für den Reibwert $\mu$ = 0,6 und der Wert $\ddot{y}_{III}$ ein Maß für den Reibwert $\mu$ = 1,0 dar.

In Fig. 3 ist ein Blockschaltbild einer nach der zweiten Alternative des erfindungsgemäßen Verfahrens arbeitenden Reibwertermittlungseinrichtung dargestellt. Bei dem in Fig. 3 dargestellten Blockschaltbild stellt der Block 6 das Fahrzeug dar. Am Fahrzeug 6 werden die Winkelgeschwindigkeiten $\omega_{VR}$ und $\omega_{VL}$ der nichtangetriebenen Räder auf an sich bekannte Weise gemessen und einer ersten Recheneinheit 7 zugeführt. In dieser ersten Recheneinheit 7 wird aus den Winkelgeschwindigkeiten $\omega_{VR}$ und $\omega_{VL}$ der beiden nichtangetriebenen Räder und dem dynamischen Radhalbmesser $r_{dyn.}$ die Fahrgeschwindigkeit V des Fahrzeuges gemäß vorstehend genannter Formel berechnet. Ferner wird in dieser ersten Recheneinheit 7 aus den Winkelgeschwindigkeiten $\omega_{VR}$ und $\omega_{VL}$, dem dynamischen Radhalbmesser $r_{dyn.}$ und der Spurweite $s_V$ der Achse der nichtangetriebenen Räder des Fahrzeuges die Gierwinkelgeschwindigkeit $\dot\psi$ gemäß vorstehend genannter Formel berechnet. Aus den in der ersten Recheneinheit 7 berechneten Werten für die Gierwinkelgeschwindigkeit $\dot\psi$ und die Fahrgeschwindigkeit V wird dann in einer zweiten Recheneinheit 8 anhand eines mathematischen Fahrzeugreferenzmodells ein Referenz- oder Soll-Lenkwinkel $\delta_{Lsoll}$ berechnet. Dieser Referenz- oder Soll-Lenkwinkel $\delta_{Lsoll}$ wird zusammen mit den am Fahrzeug gemessenen Werten für den Lenkwinkel $\delta_L$ und die Querbeschleunigung $\ddot{y}$ einer dritten Recheneinheit 9 zugeführt, in der derjenige Wert der Querbeschleunigung $\ddot{y}$ als Maß für den Reibwert zwischen der Fahrbahn und den Fahrzeugreifen bestimmt wird, bei dem die Lenkwinkeldifferenz stark anzusteigen beginnt.

Die Bestimmung der reibwertabhängigen, jeweils zulässigen Querbeschleunigung des Fahrzeuges, die ein Maß für den jeweiligen Reibwert zwischen der Fahrbahn und den Fahrzeugreifen darstellt, wird anhand der Fig. 4 näher erläutert. In Fig. 4 ist die Referenz- oder Soll-Lenkwinkel-Querbeschleunigungskurve als Gerade eingezeichnet und mit $\delta$ Lsoll bezeichnet. Ferner sind in Fig. 4 für die Reibwerte $\mu$ = 0,1, $\mu$ = 0,4, $\mu$ = 0,7 und $\mu$ = 1,0 die zugehörigen Lenkwinkel-Querbeschleunigungs-Kurven A, B, C und D eingezeichnet. Wenn beispielsweise in Fig. 4 der für den Reibwert $\mu$ = 0,1 in Form der Kurve A eingezeichnete Lenkwinkel $\delta_L$ vom Referenz- oder Soll-Lenkwinkel $\delta$ Lsoll um mehr als den Schwellwert $\Delta\delta$ Lschwell abzuweichen beginnt, dann hat das Fahrzeug für den Reibwert $\mu$ = 0,1 den Wert $\ddot{y}_A$ für die zulässige Querbeschleunigung $\ddot{y}$ erreicht. Die Werte $\ddot{y}_B$, $\ddot{y}_C$ und $\ddot{y}_D$ stellen die jeweils zulässige Querbeschleunigung $\ddot{y}$ des Fahrzeuges für die Reibwerte $\mu$ = 0,4, $\mu$ = 0,7 und $\mu$ = 1,0 dar. Die Größe des jeweils festgestellten Wertes für die zulässige Querbeschleunigung des Fahrzeuges stellt ein Maß für den jeweils vorliegenden Reibwert zwischen der Fahrbahn und den Fahrzeugreifen dar. Damit kann mit Hilfe des erfindungsgemäßen Verfahrens der Reibwert $\mu$ zwischen der Fahrbahn und den Fahrzeugreifen bei Annäherung an einen querdynamisch kritischen Fahrzustand, d. h. bei Erreichen der zulässigen Querbeschleunigung und damit wiederum bei forcierter Kurvenfahrt bestimmt werden.

**Patentansprüche**

1. Verfahren zur Ermittlung des Reibwertes zwischen der Fahrbahn und den Reifen eines Fahrzeuges bei Annäherung an einen querdynamisch kritischen Fahrzustand, dadurch gekennzeichnet, daß die jeweiligen Werte für den Lenkwinkel ($\delta_L$), die Fahrgeschwindigkeit (V), die Gierwinkelgeschwindigkeit ($\dot{\psi}$) sowie die Querbeschleunigung ($\ddot{y}$) des Fahrzeuges gemessen bzw. ermittelt werden, daß in Abhängigkeit vom Lenkwinkel ($\delta_L$) und von der Fahrgeschwindigkeit (V) anhand eines mathematischen Fahrzeugreferenzmodells eine Referenz- oder Soll-Gierwinkelgeschwindigkeit ($\dot{\psi}_{soll}$) bestimmt wird, daß die Differenz ($\Delta\dot{\psi}$) zwischen der tatsächlichen Gierwinkelgeschwindigkeit ($\dot{\psi}$) des Fahrzeuges und der Referenz- oder Soll-Gierwinkelgeschwindigkeit ($\dot{\psi}_{soll}$) ermittelt wird und daß derjenige Wert der Querbeschleunigung ($\ddot{y}$) als Maß für den Reibwert ($\mu$) zwischen der Fahrbahn und den Fahrzeugreifen bestimmt wird, bei dem die Gierwinkelgeschwindigkeitsdifferenz ($\Delta\dot{\psi}$) stark anzusteigen beginnt.

2. Verfahren nach Anspruch 1, dadurch gekennzeichnet, daß die Gierwinkelgeschwindigkeitsdifferenz ($\Delta\dot{\psi}$) zur Erkennung eines starken Anstiegs derselben mit einem Schwellwert verglichen wird.

3. Verfahren nach Anspruch 1, dadurch gekennzeichnet, daß der Differentialquotient

$$\left(\frac{\partial \Delta\dot{\psi}}{\partial \ddot{y}}\right)$$

aus der Gierwinkelgeschwindigkeitsdifferenz ($\Delta\dot{\psi}$) und der Querbeschleunigung ($\ddot{y}$) fortlaufend berechnet wird und daß dieser Differentialquotient

$$\left(\frac{\partial \Delta\dot{\psi}}{\partial \ddot{y}}\right)$$

zur Erkennung eines starken Anstiegs der Gierwinkelgeschwindigkeitsdifferenz ($\Delta\dot{\psi}$) mit einem Grenzwert verglichen wird.

4. Verfahren zur Ermittlung des Reibwertes zwischen der Fahrbahn und den Reifen eines Fahrzeuges bei Annäherung an einen querdynamisch kritischen Fahrzustand, dadurch gekennzeichnet, daß die jeweiligen Werte für den Lenkwinkel ($\delta_L$), die Fahrgeschwindigkeit (V), die Gierwinkelgeschwindigkeit ($\dot{\psi}$) sowie die Querbeschleunigung ($\ddot{y}$) des Fahrzeuges gemessen bzw. ermittelt werden, daß in Abhängigkeit von der Gierwinkelgeschwindigkeit ($\dot{\psi}$) der Fahrgeschwindigkeit (V) anhand eines mathematischen Fahrzeugreferenzmodells ein Referenz- oder Soll-Lenkwinkel ($\delta$ Lsoll) bestimmt wird, daß die Differenz ($\Delta\delta_L$) zwischen dem tatsächlichen Lenkwinkel ($\delta_L$) des Fahrzeuges und dem Referenz- oder Soll-Lenkwinkel ($\delta$ Lsoll) ermittelt wird und daß derjenige Wert der Querbeschleunigung ($\ddot{y}$) als Maß für den Reibwert ($\mu$) zwischen der Fahrbahn und dem Fahrzeugreifen bestimmt wird, bei dem die Lenkwinkeldifferenz ($\Delta\delta_L$) stark anzusteigen beginnt.

5. Verfahren nach Anspruch 4, dadurch gekennzeichnet, daß die Lenkwinkeldifferenz ($\Delta\delta_L$) zur Erkennung eines starken Anstiegs derselben mit einem Schwellwert verglichen wird.

**6.** Verfahren nach Anspruch 4, dadurch gekennzeichnet, daß der Differentialquotient

$$\left(\frac{\partial \Delta \delta_L}{\partial \ddot{y}}\right)$$

aus der Lenkwinkeldifferenz ($\Delta \delta_L$) und der Querbeschleunigung ($\ddot{y}$) fortlaufend berechnet wird und daß dieser Differentialquotient

$$\left(\frac{\partial \Delta \delta_L}{\partial \ddot{y}}\right)$$

zur Erkennung eines starken Anstiegs der Lenkwinkeldifferenz ($\Delta \delta_L$) mit einem Grenzwert verglichen wird.

## Claims

1. A method of determining the friction between the road and the tyres of a vehicle when approaching a critical transverse dynamic driving state, characterised in that the respective values of the steering angle ($\delta_L$), the speed (V), the angular-speed of yaw ($\dot{\Psi}$) and the transverse acceleration ($\ddot{y}$) of the vehicle are measured or determined, in that a reference or set angular speed of yaw ($\dot{\Psi}_{set}$) is determined in dependence on the steering angle ($\delta_L$) and the speed (V) using a mathematical vehicle reference model, in that the difference ($\Delta \dot{\Psi}$) between the actual angular speed of yaw ($\dot{\Psi}$) of the vehicle and the reference or set angular-speed of yaw ($\dot{\Psi}_{set}$) is determined and in that that value of the transverse acceleration ($\ddot{y}$) at which the angular speed of yaw difference ($\Delta \dot{\Psi}$) begins to increase sharply is used as a measure of the friction ($\mu$) between the road and the vehicle tyres.

2. A method according to claim 1, characterised in that the angular speed of yaw difference ($\Delta \dot{\Psi}$) is compared with a threshold value in order to recognise a sharp increase in the aforementioned difference.

3. A method according to claim 1, characterised in that the differential quotient ($\partial \Delta \dot{\Psi} / \partial \ddot{y}$) of the angular speed of yaw difference ($\Delta \dot{\Psi}$) and the transverse acceleration ($\ddot{y}$) is continuously calculated, and in that this differential quotient ($\partial \Delta \dot{\Psi} / \partial \ddot{y}$) is compared with a reference value in order to recognise a sharp increase in the angular speed of yaw difference ($\Delta \dot{\Psi}$).

4. A method of determining the friction between the road and the tyres of a vehicle when approaching a critical transverse dynamic driving state, characterised in that the respective values of the steering angle ($\delta_L$), the speed (V), the angular speed of yaw ($\dot{\Psi}$) and the transverse acceleration ($\ddot{y}$) of the vehicle are measured or determined, in that the reference or set steering angle ($\delta_{Lset}$) is determined in dependence on the angular speed of yaw ($\dot{\Psi}$) and the speed (V), using a mathematical speed reference model, in that the difference ($\Delta \delta_L$) between the actual steering angle ($\delta_L$) of the vehicle and the reference or set steering angle ($\delta_{Lset}$) is determined and in that that value of the transverse acceleration ($\ddot{y}$) at which the steering-angle difference ($\Delta \delta_L$) begins to increase sharply is used as a measure of the friction ($\mu$) between the road and the vehicle tyres.

5. A method according to claim 4, characterised in that the steering-angle difference ($\Delta \delta_L$) is compared with a threshold value in order to recognise a sharp increase in the aforementioned difference.

6. A method according to claim 4, characterised in that the differential quotient ($\partial \Delta \delta_L / \partial \ddot{y}$) of the steering-angle difference ($\Delta \delta_L$) and the transverse acceleration ($\ddot{y}$) is continuously calculated and this differential quotient ($\partial \Delta \delta_L / \partial \ddot{y}$) is compared with a limiting value in order to recognise a sharp increase in the steering-angle difference ($\Delta \delta_L$).

**Revendications**

1.  Procédé pour déterminer le coefficient de frottement (coefficient d'adhérence) entre la chaussée et les pneumatiques d'un véhicule en se rapprochant d'un état de circulation critique pour la dynamique transversale, caractérisé en ce qu'on mesure ou détermine les valeurs respectives de l'angle de braquage ($\delta_L$), de la vitesse de circulation (V), de la vitesse de lacet ($\dot{\psi}$) ainsi que de l'accélération transversale ($\ddot{y}$) du véhicule, et en fonction de l'angle de braquage ($\delta_L$) et de la vitesse (V) du véhicule, à l'aide d'un modèle mathématique de référence du véhicule, on définit une vitesse de lacet de référencé ou de consigne ($\dot{\psi}_{cons}$), on détermine la différence ($\Delta\dot{\psi}$) entre la vitesse effective de lacet ($\dot{\psi}$) du véhicule et la vitesse de lacet de référence ou de consigne ($\dot{\psi}_{cons}$), et on prend la valeur respective de l'accélération transverssle ($\ddot{y}$) comme mesure du coefficient de frottement ($\mu$) entre la chaussée et les pneumatiques du véhicule, valeur pour laquelle la différence de vitesse de lacet ($\Delta\dot{\psi}$) commence à augmenter fortement.

2.  Procédé selon la revendication 1, caractérisé en ce qu'on compare la différence de vitesse de lacet ($\Delta\dot{\psi}$) à une valeur de seuil pour détecter une forte augmentation de cette différence.

3.  Procédé selon la revendication 1, caractérisé en ce qu'on calcule en permanence le quotient differèntiel

$$\left(\frac{\partial\Delta\dot{\psi}}{\partial\ddot{y}}\right)$$

    à partir de la différence des vitesses de lacet ($\Delta\dot{\psi}$) et de l'accélération transversale ($\ddot{y}$), et on compare ce quotient différentiel

$$\left(\frac{\partial\Delta\dot{\psi}}{\partial\ddot{y}}\right)$$

    à une valeur limite pour reconnaître une forte augmentation de la différence de vitesse de lacet ($\Delta\dot{\psi}$).

4.  Procédé pour déterminer le coefficient de frottement entre la chaussée et les pneumatiques d'un,véhicule en se rapprochant d'un état de circulation critique du point de vue de la dynamique transversale, caractérisé en ce qu'on mesure et détermine les valeurs respectives de l'angle de braquage ($\delta_L$), de la vitesse de circulation (V), de la vitesse de lacet ($\dot{\psi}$) ainsi que de l'accélération transversale ($\ddot{y}$) du véhicule et, en fonction de la vitesse de lacet ($\dot{\psi}$), de la vitesse de circulation (V), à l'aide d'un modèle mathématique de référence du véhicule, on détermine un angle de braquage de référence ou de consigne ($\delta_{Lcons}$), on détermine la différence ($\Delta\delta_L$) entre l'angle de braquage effectif ($\delta_L$) du véhicule et l'angle de braquage de référence ou de consigne ($\delta_{Lcons}$) et on utilise comme mesure du coefficient d'adhérence ($\mu$) entre la chaussée et les pneumatiques du véhicule, cette valeur de l'accélération transversale ($\ddot{y}$) Pour laquelle la différence des angles de braquage ($\Delta\delta_L$) commence à augmenter fortement.

5.  Procédé selon la revendication 4, caractérisé en ce qu'on compare à une valeur de seuil la différence de l'angle de braquage ($\Delta\delta_L$) pour détester une forte augmentation de cette différence.

6.  Procédé selon la revendication 4, caractérisé en ce qu'on calcule en permanence le rapport différentiel

$$\left(\frac{\partial\Delta\delta_L}{\partial\ddot{y}}\right)$$

de la différence d'angle de braquage ($\Delta\delta_L$) et de l'accélération transversale ($\ddot{y}$) et on compare ce rapport différentiel

$$\left(\frac{\partial \Delta \delta_L}{\partial \ddot{y}}\right)$$

pour déceler une forte augmentation de la différence de l'angle de braquage ($\Delta\delta_L$), par rapport à une valeur limite.

FIG.1

FIG.3

FIG.2

FIG.4